# FASCICULE DE BREVET EUROPEEN

(11) **EP 0 267 079 B1**
(45) Date de publication et mention de la délivrance du brevet: **17.03.1993**
(21) Numéro de dépôt: 87402229.6
(22) Date de dépôt: 07.10.1987
(51) Int. Cl.: H01R 25/16

(54) **Accessoire de dérivation pour conduit de câblage**
Abzweigungszubehör für Verkabelungsrohr
Derivation accessory for a wiring conduit

(30) Priorité: 08.10.1986 FR 8614012
(43) Date de publication de la demande: 11.05.1988
(73) Titulaire: PLANET WATTOHM, 60303 Senlis (FR)
(72) Inventeur: Decorbie, Ghislain, F-60500 Chantilly (FR)
(74) Mandataire: CABINET BONNET-THIRION

(56) Documents cités:
- DE-A- 2 060 093
- GB-A- 1 199 802

## Description

La présente invention concerne d'une manière générale les conduits de câblage, tels que goulottes, moulures, plinthes ou analogues, du type de ceux qui, à rapporter par exemple sur un mur, sont couramment mis en oeuvre pour le logement et la protection de conducteurs électriques.

Ainsi qu'on le sait, il s'agit en pratique de profilés comportant un corps, qui a globalement une configuration en U, avec une partie médiane formant semelle et deux ailes latérales, et qui peut éventuellement être compartimenté intérieurement par des cloisons longitudinales, et un couvercle, qui est propre à être rapporté sur un tel corps.

La présente invention vise plus particulièrement l'établissement, à partir d'un tel conduit de câblage, ou conduit de câblage principal, d'une dérivation, qui, mettant en oeuvre elle aussi un conduit de câblage, ou conduit de câblage dérivé, est propre à la desserte d'un quelconque appareillage électrique.

Cette dérivation implique un changement de direction par rapport au conduit de câblage principal, en pratique suivant une perpendiculaire à celui-ci.

Le plus souvent, l'ensemble étant implanté sur un même mur, ce changement de direction se fait dans un même plan, celui de ce mur.

Mais, lorsque, par exemple, le conduit de câblage principal concerné est implanté au ras d'un plafond et qu'il s'agit d'assurer la desserte d'une suspension accrochée à celui-ci, le changement de direction de la dérivation correspondante implique conjointement un changement de plan, pour passer du plan du mur à celui du plafond.

Quoi qu'il en soit, l'établissement d'une dérivation à partir d'un conduit de câblage implique usuellement à ce jour l'exécution d'au moins une coupe.

Par exemple, c'est la totalité d'un tel conduit de câblage qui est ainsi l'objet d'une telle coupe, pour qu'il lui soit substitué localement une boîte, communément dite boîte de dérivation, propre à l'établissement de la dérivation recherchée.

Au mieux, seule l'une des ailes latérales du corps d'un tel conduit de câblage, celle située du côté où doit s'étendre la dérivation à établir, est affectée d'une telle coupe, pour passage des conducteurs électriques concernés, et, en substitution à une portion du couvercle du conduit de câblage, il est mis en place, pour recouvrir l'ensemble, un accessoire de dérivation, qui, de forme générale en T, s'étend en pratique sensiblement dans le plan d'un tel couvercle, pour rétablissement de la continuité de celui-ci.

DE-A-2 060 093 et GB-A-1 199 802 décrirent des accessoires de dérivation pour conduits de câblage.

La présente invention a d'une manière générale pour objet une disposition permettant avantageusement de s'affranchir de toute coupe.

De manière plus précise, elle a pour objet un accessoire de dérivation pour conduit de câblage tel que goulotte, moulure, plinthe ou analogue, caractérisé en ce qu'il comporte, d'une part, un boîtier, par lequel il est adapté à être disposé localement en saillie sur le corps d'un conduit de câblage principal en substitution à une portion correspondante du couvercle de celui-ci, et qui, dépourvu de fond, présente une paroi de façade et trois parois latérales, à savoir deux parois transversales et une paroi longitudinale, lesdites parois latérales définissant conjointement par leur bord libre opposé à la paroi de façade une face par laquelle le boîtier est adapté à être disposé sur le corps du conduit de câblage principal, et, d'autre part, un réducteur, qui forme une pièce distincte du boîtier, et qui comporte lui-même une paroi de façade et, disposées chacune respectivement de part et d'autre de celle-ci, en correspondance avec les parois latérales transversales du boîtier, deux parois latérales, ladite paroi de façade et lesdites parois latérales de ce réducteur définissant conjointement par leurs extrémités situées d'un même côté deux ouvertures de contour sensiblement quadrangulaire, l'une, qui est de largeur sensiblement égale à l'écartement des parois latérales transversales du boîtier, et par laquelle le réducteur est adapté à être rapporté sur le boîtier, l'autre, qui est de largeur inférieure à la précédente, et par laquelle le réducteur est destiné à coiffer un conduit de câblage dérivé établi sensiblement perpendiculairement au conduit de câblage principal, de manière que les deux parois latérales du réducteur s'étendent en oblique entre les deux ouvertures, avec, entre ledit réducteur et les parois latérales transversales dudit boîtier, à l'extrémité libre de celles-ci, c'est-à-dire du côté de celles-ci opposé à la paroi latérale longitudinale de ce boîtier, des moyens d'accouplement propres à permettre d'y rapporter de manière amovible ledit réducteur suivant une première orientation pour laquelle ce réducteur est sensiblement dans le prolongement latéral du boîtier, et en ce qu'une portion au moins de la paroi de façade dudit boîtier, entre les parois latérales transversales de celui-ci, est elle-même amovible, avec, entre ladite portion de paroi de façade amovible et lesdites parois latérales transversales, des moyens d'accouplement de même type que les précédents, en sorte que, en substitution à ladite portion de paroi de façade amovible, le réducteur peut être rapporté sur le boîtier suivant une deuxième orientation, d'équerre par rapport à la première, pour laquelle ce réducteur fait globalement saillie sur la paroi de façade du boîtier.

Ainsi, l'accessoire de dérivation suivant l'invention est adapté à être superposé, localement, par son boîtier, au corps d'un conduit de câblage, et, le volume que forme un tel boîtier communiquant alors directement avec le volume intérieur d'un tel conduit de câblage, puisque ce boîtier est dépourvu de fond, il est possible d'y faire passer les conducteurs électriques nécessaires, sans qu'il y ait pour cela à appliquer à ce conduit de câblage une quelconque coupe.

Corollairement, par le réducteur qu'il comporte, l'accessoire de dérivation suivant l'invention est avantageusement susceptible d'assurer par lui-même la réduction de largeur qui existe toujours en pratique entre un conduit de câblage principal et le conduit de câblage dérivé à l'aide duquel il est établi une dérivation à partir de celui-ci.

Ainsi, l'accessoire de dérivation suivant l'invention peut convenir aussi bien, au gré des utilisateurs, à un changement de direction dans un plan, tel que c'est le cas sur un simple mur, qu'à un changement de direction s'accompagnant d'un changement de plan, tel que c'est le cas par exemple lors du passage d'un mur à un plafond.

Les caractéristiques et avantages de l'invention ressortiront d'ailleurs de la description qui va suivre, à titre d'exemple, en référence aux dessins schématiques annexés sur lesquels :
la figure 1 est une vue en perspective illustrant la mise en oeuvre sur un mur d'un accessoire de dérivation suivant l'invention ;
la figure 2 est, à échelle supérieure, une vue en perspective de l'accessoire de dérivation suivant l'invention ;
la figure 3 en est, avec des arrachements locaux, une vue en perspective éclatée ;
la figure 4 est, suivant la flèche IV de la figure 3, une vue en élévation du boîtier que comporte cet accessoire de dérivation, la portion de paroi de façade amovible que comporte celui-ci étant supposée enlevée ;
la figure 5 est une vue en coupe transversale de ce boîtier, suivant la ligne V-V de la figure 4 ;
la figure 6 en est une vue en coupe longitudinale, suivant la ligne VI-VI de la figure 4 ;
la figure 7 en est une autre vue, partielle, en coupe longitudinale, suivant la ligne VII-VII de la figure 4 ;
la figure 8 reprend, à échelle supérieure, le détail de la figure 5 repéré par un encart VIII sur celle-ci ;
la figure 9 reprend, à la même échelle que la précédente, le détail de la figure 6 repéré par un encart IX sur celle-ci ;
la figure 10 est, à l'échelle de la figure 9, une vue partielle en coupe longitudinale de la portion de paroi de façade amovible de ce boîtier, suivant la ligne X-X de la figure 3 ;
la figure 11 est, suivant la flèche XI de la figure 3, et avec un arrachement local, une vue en élévation du réducteur que comporte également l'accessoire de dérivation suivant l'invention ;
la figure 12 est une vue en coupe transversale de ce réducteur, suivant la ligne XII-XII de la figure 11 ;
la figure 13 en est une vue de dessous, suivant la flèche XIII de la figure 11 ;
la figure 14 en est une vue partielle en coupe suivant la ligne XIV-XIV de la figure 13 ;
la figure 15 reprend, à échelle supérieure, le détail de la figure 11 repéré par un encart XV sur celle-ci ;
la figure 16 reprend, à la même échelle que la précédente, le détail de la figure 14 repéré par un encart XVI sur celle-ci ;
la figure 17 est, suivant la flèche XVII de la figure 18, une vue en plan de l'ensemble des pièces constitutives de l'accessoire de dérivation suivant l'invention, lorsque celui-ci est brut de moulage ;
la figure 18 est une vue en coupe transversale de cet ensemble, suivant la ligne XVIII-XVIII de la figure 17 ;
la figure 19 est une vue en perspective analogue à celle de la figure 1, pour une mise en oeuvre entre mur et plafond de l'accessoire de dérivation suivant l'invention.

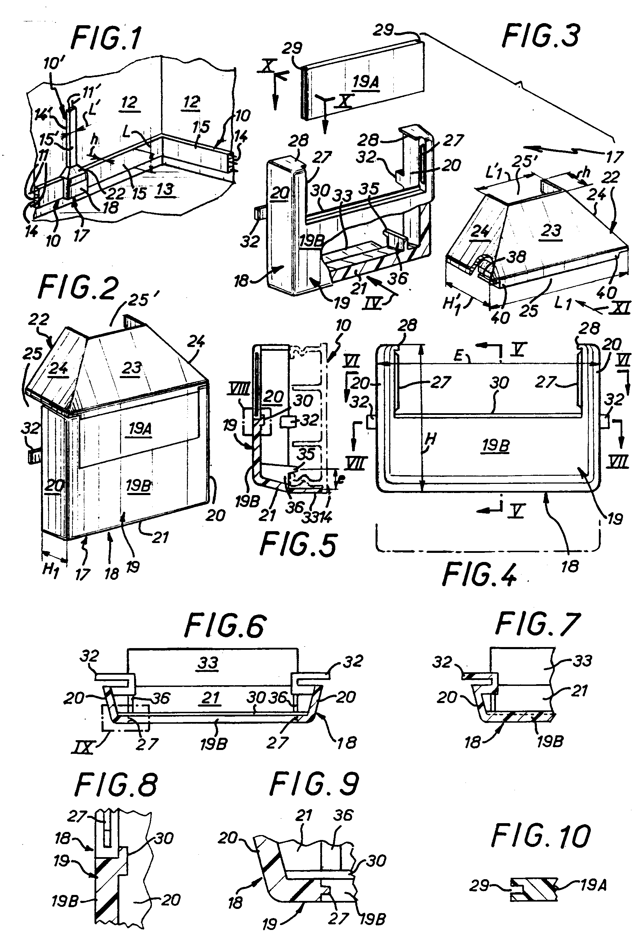

Tel qu'illustré schématiquement sur les figures 1 et 19, il s'agit d'assurer la desserte d'un quelconque appareillage électrique, non représenté, à partir d'un conduit de câblage principal 10 contenant les conducteurs électriques 11 correspondants.

Dans la forme de mise en oeuvre plus particulièrement illustrée à la figure 1, ce conduit de câblage principal 10 court en plinthe à la base de murs 12, à proximité d'un plancher 13.

Il s'agit donc, pour la desserte de l'appareillage électrique concerné, d'assurer, à partir du conduit de câblage principal 10, et suivant un changement de direction qui se fait en pratique sensiblement perpendiculairement à celui-ci, l'établissement d'un conduit de câblage dérivé 10ʹ, propre au logement et à la protection des conducteurs électriques 11ʹ nécessaires à la desserte recherchée, eux-mêmes convenablement dérivés des conducteurs électriques 11 précédents.

La constitution des conduits de câblage 10, 10ʹ est bien connue par elle-même, et, ne relevant pas en soi de la présente invention, elle ne sera pas décrite en détail ici.

Il suffira d'indiquer que ces conduits de câblage 10, 10ʹ sont formés en pratique à l'aide de deux types de profilés, l'un formant un corps 14, 14ʹ, par lequel un tel conduit de câblage 10, 10ʹ est adapté à être fixé au mur 12 concerné, l'autre formant un couvercle 15, 15ʹ, adapté lui, à être rapporté, en pratique par simple encliquetage, sur le corps 14, 14ʹ correspondant.

En pratique, la largeur, L, du conduit de câblage principal 10 est supérieure à celle, Lʹ, du conduit de câblage dérivé 10ʹ.

Pour l'établissement du conduit de câblage dérivé 10ʹ, il est mis en oeuvre, suivant l'invention, un accessoire de dérivation 17.

Suivant l'invention, cet accessoire de dérivation 17 comporte, d'une part, un boîtier 18, par lequel, tel que schématisé en traits interrompus à la figure 5, il est adapté à être disposé localement en saillie sur le corps 14 du conduit de câblage principal 10, en substitution à une portion correspondante du couvercle 15 de celui-ci, et qui, dépourvu de fond, et donc en forme générale de cloche, présente une paroi de façade 19 et trois parois latérales 20, 21, à savoir deux parois transversales 20 et une paroi longitudinale 21, et, d'autre pat, un réducteur 22, qui comporte lui-même une paroi de façade 23 et deux parois latérales 24, lesdites parois latérales 24 dudit réducteur 22 s'étendant en oblique entre deux ouvertures 25, 25ʹ, l'une de largeur L1 sensiblemet égale à l'écartement E des parois latérales transversales 20 du boîtier 18, pour adaptation à celui-ci, l'autre de largeur Lʹ1 inférieure à la précédente.

En pratique, cette largeur Lʹ1 de l'ouverture de moindre largeur 25ʹ du réducteur 22, qui forme l'ouverture de sortie de celui-ci, et donc l'ouverture de sortie pour l'ensemble, et qui, comme l'ouverture de plus grande largeur 25, est de contour sensiblement quadrangulaire, est sensiblement égale à la largeur Lʹ du conduit de câblage dérivé 10ʹ, tout en étant légèrement supérieure à celle-ci.

Conjointement, le boîtier 18 a, transversalement, une hauteur H sensiblement égale à la largeur L du conduit de câblage principal 10.

Dans la forme de réalisation représentée sur les figures 1 à 19, le réducteur 22 forme une pièce distincte du boîtier 18, il est prévu, entre ledit réducteur 22 et les parois latérales transversales 20 dudit boîtier 18, à l'extrémité libre de celles-ci, c'est-à-dire à l'extrémité de ces parois latérales transversales opposée à la paroi latérale longitudinale 21 qu'elles encadrent, des moyens d'accouplement, détaillés ci-après, propres à permettre d'y rapporter de manière amovible ledit réducteur 22, et une portion 19A, au moins, de la paroi de façade 19 dudit boîtier 18, entre lesdites parois latérales transversales 20 de celui-ci, est elle-même amovible, avec, entre ladite portion de paroi de façade amovible 19A et lesdites parois latérales transversales 20, des moyens d'accouplement de même type que les précédents.

En pratique, la portion de paroi de façade amovible 19A que présente ainsi le boîtier 18 forme une simple plaquette de contour globalement quadrangulaire, et ses dimensions correspondent à celles de l'ouverture de moindre largeur 25ʹ du réducteur 22.

Dans la forme de réalisation représentée, il subsiste, entre les parois latérales transversales 20 du boîtier 18, une portion de paroi de façade fixe 19B.

Mais, transversalement, c'est-à-dire suivant la hauteur H de ce boîtier 18, et tel que schématisé en traits interrompus à la figure 4, l'extension de cette portion de paroi de façade fixe 19B peut être plus ou moins étendue, suivant, précisément, l'extension de cette hauteur H.

Dans la forme de réalisation représentée, les moyens d'accouplement mis en oeuvre entre, d'une part, les parois latérales transversales 20 du boîtier 18, et, d'autre part, la portion de paroi de façade amovible 19A de celui-ci et le réducteur 22 sont des moyens de coulissement, lesdits moyens de coulissement comportant au moins une rainure sur l'une quelconque des pièces concernées, et au moins une nervure, complémentaire de ladite rainure, sur l'autre de celles-ci.

Dans la forme de réalisation représentée, il y a, ainsi, en saillie vers l'intérieur, pour chacune des deux parois latérales transversales 20 du boîtier 18, deux nervures 27, 28, l'une qui s'étend sensiblement dans l'alignement de la portion de paroid de façade fixe 19B subsistante, à mi-épaisseur par rapport à celle-ci, l'autre qui s'étend sensiblement perpendiculairement à la précédente, transversalement par rapport à la paroi latérale transversale 20 qu'elle affecte, à l'extrémité libre de celle-ci.

Conjointement, pour la portion de paroi de façade amovible 19A, il y a, disposées dos à dos, chacune respectivement le long des deux bords transversaux opposés concernés de cette portion de paroi de façade amovible 19A, et sur toute la longueur de ceux-ci, deux rainures 29.

Dans la forme de réalisation représentée, la portion de paroi de façade fixe 19B du boîtier 18 est par ailleurs bordée, le long de son bord libre, et en saillie sur sa face interne, par une baguette 30, qui fait également saillie en direction de l'extrémité libre des parois latérales transversales 20 de ce boîtier 18.

Dans la forme de réalisation représentée, les parois latérales transversales 20 du boîtier 18 s'étendent légèrement en oblique par rapport à la paroi de façade 19 de celui-ci, et il en est de même pour sa paroi latérale longitudinale 21, en sorte que, dans son ensemble, ce boîtier 18 a une forme générale tronc-pyramidale.

De préférence, et tel que représenté, le boîtier 18 présente, en saillie à la base de chacune de ses parois latérales transversales 20, au moins un crochet 32 propre à son crochetage sur les tronçons de couvercle 15 correspondants du conduit de câblage principal 10.

Dans la forme de réalisation représentée, seul un tel crochet 32 est prévu pour chacune des parois latérales transversales 20, dans la zone médiane de celles-ci.

De préférence, également, et tel qu'également représenté, la paroi latérale longitudinale 21 du boîtier 18 se prolonge, sur une partie au moins de sa longueur, par un flasque 33.

En pratique, celui-ci ne s'étend que sur une portion de longueur de cette paroi latérale longitudinale 21, ses extrémités étant chacune respectivement en retrait par rapport aux extrémités de celle-ci.

Enfin, dans la forme de réalisation représentée, le boîtier 18 présente, localement, en saillie vers le bas, parallèlement à sa paroi latérale longitudinale 21, à distance de celle-ci, au moins un ergot 35.

En pratique, dans la forme de réalisation représentée, deux ergots 35 sont ainsi prévus, et chacun d'eux forme le prolongement local d'une cloison 36 prévue, localement, en refend vers l'intérieur, en saillie sur la paroi latérale longitudinale 21, sensilement perpendiculairement à celle-ci.

La distance e séparant un tel ergot 35 de cette paroi latérale longitudinale 21 est faite légèrement supérieure à la dimension transversale correspondante des ailes latérales du corps 14 du conduit de câblage principal 10.

Dans la forme de réalisation représentée, le réducteur 22 est, comme le boîtier 18 précédent, dépourvu de fond.

En outre, dans cette forme de réalisation, la paroi de façade 23 de ce réducteur 22 s'étend elle aussi en oblique, en sorte que, dans son ensemble, ce réducteur 22 a lui aussi une forme générale tronc-pyramidale.

Du côté, au moins, de son ouverture de plus grande largeur 25, les parois latérales 24 du réducteur 22 ont une hauteur Hʹ1 supérieure à celle H1 des parois latérales 20, 21 du boîtier 18.

En pratique, la différence entre ces hauteurs Hʹ1 et H1 est sensiblement égale à la hauteur, ou épaisseur, h du corps 14 du conduit de câblage principal 10.

Compte tenu de l'obliquité de sa paroi de façade 23, les parois latérales 24 du réducteur 22 ont, du côté de son ouverture de moindre largeur 25ʹ, une hauteur qui est inférieure à leur hauteur Hʹ1 du côté de l'ouverture de plus grande largeur 25, et qui, en pratique, est sensiblement égale à la hauteur h, le conduit de câblage dérivé 10ʹ ayant lui-même une hauteur qui, en pratique, est sensiblement égale à celle du conduit de câblage principal 10.

Pour coopération avec les nervures 27 ou 28 du boîtier 18, il y a, pour le réducteur 22, disposées dos à dos, au voisinage, chacune respectivement, de l'extrémité de ses parois latérales 24, du côté de son ouverture de plus grande largeur 25, deux rainures 38.

En pratique, ces rainures 38 sont formées sur des piédroits 39, qui, sur une partie de la hauteur des parois latérales 24 du réducteur 22, s'étendent en saillie sur la face interne de la paroi de façade 23 de celui-ci, à proximité de l'extrémité desdites parois latérales 24 correspondant à l'ouverture de plus grande largeur 25.

Du côté de la paroi de façade 23, ces rainures 38 sont en pratique fermées transversalement par une lèvre défonçable 40 qui s'étend en continuité avec ladite paroi de façade 23, à niveau avec la surface extérieure de celle-ci.

De préférence, et tel que représenté, les parois latérales 24 du réducteur 22 présentent, transversalement, de place en place, en correspondance de l'une à l'autre, et sur une partie au moins de leur hauteur correspondant à la hauteur h de l'ouverture de moindre largeur 25ʹ, des zones de moindre résistance 41, propres à permettre, par élimination d'une portion de ces par ois latérales 24, une augmentation de largeur Lʹ1 de ladite ouverture de moindre largeur 25ʹ.

Dans la forme de réalisation représentée, trois zones de moindre résistance 41 sont ainsi prévues pour chacune des parois latérales 24 du réducteur 22, et, en pratique, elles résultent, chacune respectivement, de saignées, de section transversale triangulaire, ménagées sur la face interne de celles-ci.

Ainsi qu'il est aisé de le comprendre, les diverses pièces ainsi constitutives de l'accessoire de dérivation 17 suivant l'invention peuvent avantageusement être réalisées en matière synthétique, par moulage de celle-ci.

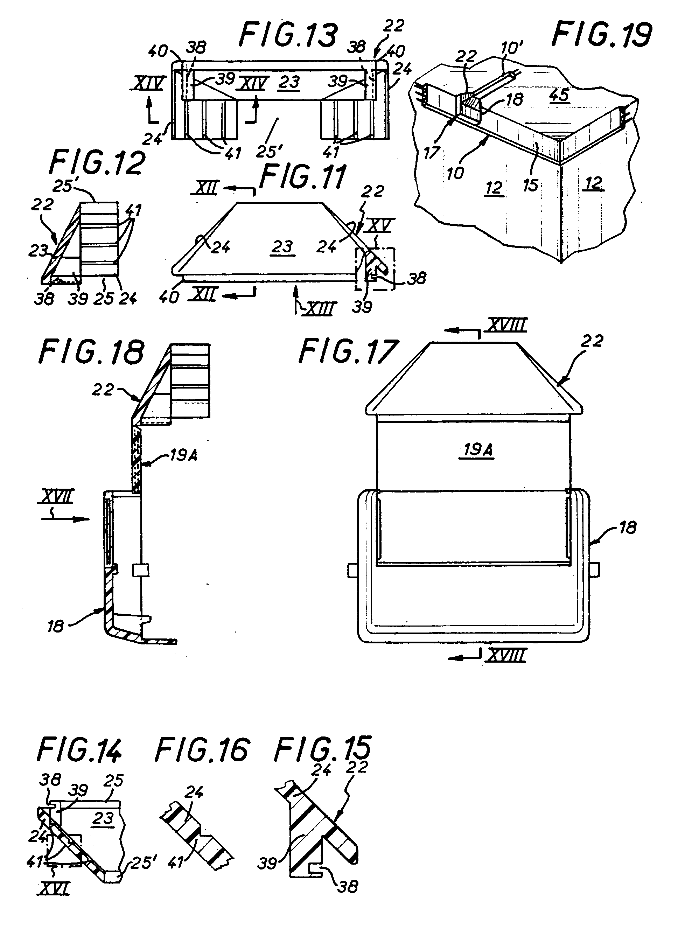

De préférence, et tel qu'illustré sur les figures 17 et 18, ce moulage est fait simultanément, en sorte que, lorsqu'il est brut de moulage, les diverses pièces constituant l'accessoire de dérivation 17 suivant l'invention, à savoir son boîtier 18, la portion de paroi de façade amovible 19A de celui-ci, et son réducteur 22, sont attenantes deux à deux, avec, entre elles, des zones de moindre résistance.

Par exemple, et tel que représenté, la portion de paroi de façade amovible 19A s'étend à compter de l'extrémité libre des parois latérales transversales 20 du boîtier 18, à la base de celles-ci, et le réducteur 22 s'étend, lui, à compter de la tranche opposée de cette portion de paroi de façade amovible 19A.

Pour la mise en oeuvre de l'accessoire de dérivation 17 suivant l'invention, il suffit, donc, de dissocier les unes des autres ces diverses pièces.

Lorsque, tel que représenté à la figure 1, seul un changement de direction dans un plan est nécessaire, la portion de paroi de façade amovible 19A est utilisée, et, par les moyens d'accouplement que constituent avec les nervures 27 des parois latérales transversales 20 ses rainures 29, elle est mise en place, par simple coulissement, entre ces parois latérales transversales 20, en continuité avec la portion de paroi de façade fixe 19B, ce qui reconstitue dans son ensemble la paroi de façade 19 correspondante.

Par les moyens d'accouplement que constituent conjointement, avec ses propres rainures 38, les nervures 28 des parois latérales transversales 20 du boîtier 18, le réducteur 22 est à son tour mis en place, par simple coulissement, sur ce boîtier 18.

Il s'étend alors suivant une première orientation par rapport à celui-ci, pour laquelle il est sensiblement dans son prolongement latéral.

Les connexions nécessaires ayant été faites entre les conducteurs électriques 11ʹ dérivés et les conducteurs électriques principaux 11, l'accessoire de dérivation 17 suivant l'invention est mis en place sur l'ensemble.

Par son boîtier 18, il vient coiffer localement le corps 14 du conduit de câblage principal 10, tandis que, par son réducteur 22, il vient coiffer, conjointement, le conduit de câblage dérivé 10ʹ.

Lors de sa mise en place sur le corps 14 du conduit de câblage principal 10, l'accessoire de dérivation 17 suivant l'invention vient coiffer, entre le flasque 33 prolongeant la paroi latérale longitudinale 21 de son boîtier 18 et les ergots 35 dont est muni à cet effet ce dernier, celle des ailes latérales de ce corps 14 qui est opposée au conduit de câblage dérivé 10ʹ, ce qui assure son maintien latérale par rapport à l'ensemble.

En outre, lorsque des tronçons de courvercle 15 sont à leur tour mis en place sur le corps 14 du conduit de câblage principal 10, ces tronçons de couvercle 15 viennent recouvrir les crochets 32 que comporte le boîtier 18 de l'accessoire de dérivation 17 suivant l'invention, ce qui assure à son tour le maintien de celui-ci perpendiculairement à ce conduit de câblage principal 10.

Ainsi, l'accessoire de dérivation 17 se trouve convenablement assujetti, de lui-même, à l'ensemble.

En outre, et ainsi qu'on l'aura compris, le volume que forme avantageusement son boîtier 18 au-dessus du corps 14 du conduit de câblag e principal 10 permet le raccordement des conducteurs électriques dérivés 11ʹ aux conducteurs électriques principaux 11 sans qu'il soit nécessaire d'appliquer une quelconque découpe à ce corps 14 pour le passage de ces conducteurs électriques dérivés 11ʹ.

Lorsque le changement de direction de la dérivation à établir s'accompagne d'un changement de plan, et c'est le cas par exemple au ras d'un plafond 45, figure 19, la portion de paroi de façade amovible 19A du boîtier 18 est éliminée, et il lui est substitué le réducteur 22, par engagement à coulissement de celui-ci, par ses rainures 38, sur les nervures 27 que présentent en saillie vers l'intérieur les parois latérales transversales 20 de ce boîtier 18.

En effet, comme déjà succinctement exposé ci-dessus, les dimensions de la portion de paroi de façade amovible 19A du boîtier 18 correspondent à celles de l'ouverture de plus grande largeur 25 du réducteur 22.

Autrement dit, la longueur de cette portion de paroi de façade amovible 19A du boîtier 18, perpendiculairement à ses rainures 29, est sensiblement égale à la largeur L1 de cette ouverture de plus grande largeur 25 du réducteur 22, tandis que sa hauteur, suivant lesdites rainures 29, est sensiblement égale à la hauteur Hʹ1 de celle-ci.

Quoi qu'il en soit, le réducteur 22 est alors rapporté sur le boîtier 18 suivant une deuxième orientation, qui, distincte de la première, s'étend sensiblement d'équerre par rapport à celle-ci, et pour laquelle il fait globalement saillie sur la paroi de façade 19 du boîtier 18.

Le changement de plan nécessaire est ainsi assuré.

## Revendications

1. Accessoire de dérivation pour conduit de câblage tel que goulotte, moulure, plinthe ou analogue, caractérisé en ce qu'il comporte, d'une part, un boîtier (18), par lequel il est adapté à être disposé localement en saillie sur le corps (14) d'un conduit de câblage principal (10) en substitution à une portion correspondante du couvercle (15) de celui-ci, et qui, dépourvu de fond, présente une paroi de façade (19) et trois parois latérales, à savoir deux parois transversales (20) et une paroi longitudinale (21), lesdites parois latérales (20,21) définissant conjointement par leur bord libre opposé à la paroi de façade (19) une face par laquelle le boîtier (18) est adapté à être disposé sur le corps (14) du conduit de câblage principal (10), et, d'autre part, un réducteur (22), qui forme une pièce distincte du boîtier (18), et qui comporte lui-même une paroi de façade (23) et, disposées chacune respectivement de part et d'autre de celle-ci, en correspondance avec les parois latérales transversales (20) du boîtier (18), deux parois latérales (24), ladite paroi de façade (23) et lesdites parois latérales (24) de ce réducteur (22) définissant conjointement par leurs extrémités situées d'un même côté deux ouvertures (25,25') de contour sensiblement quadrangulaire, l'une (25), qui est de largeur (L₁) sensiblement égale à l'écartement (E) des parois latérales transversales (20) du boîtier (18), et par laquelle le réducteur (22) est adapté à être rapporté sur le boîtier (18), l'autre (25'), qui est de largeur (L'₁) inférieure à la précédente, et par laquelle le réducteur (22) est destiné à coiffer un conduit de câblage dérivé (10') établi sensiblement perpendiculairement au conduit de câblage principal (10), de manière que les deux parois latérales (24) du réducteur s'étendent en oblique entre les deux ouvertures (25,25'), avec, entre ledit réducteur (22) et les parois latérales transversales (20) dudit boîtier (18), à l'extrémité libre de celles-ci, c'est-à-dire du côté de celles-ci opposé à la paroi latérale longitudinale (21) de ce boîtier (18), des moyens d'accouplement propres à permettre d'y rapporter de manière amovible ledit réducteur (22) suivant une première orientation pour laquelle ce réducteur (22) est sensiblement dans le prolongement latéral du boîtier (18), et en ce qu'une portion (19A) au moins de la paroi de façade (19) dudit boîtier (18), entre les parois latérales transversales (20) de celui-ci, est elle-même amovible, avec, entre ladite portion de paroi de façade amovible (19A) et lesdites parois latérales transversales (20), des moyens d'accouplement de même type que les précédents, en sorte que, en substitution à ladite portion de paroi de façade amovible (19A), le réducteur (22) peut être rapporté sur le boîtier (18) suivant une deuxième orientation, d'équerre par rapport à la première, pour laquelle ce réducteur (22) fait globalement saillie sur la paroi de façade (19) du boîtier (18).

2. Accessoire de dérivation suivant la revendication 1, caractérisé en ce que les moyens d'accouplement sont des moyens de coulissement, lesdits moyens de coulissement comportant au moins une rainure (29, 38) sur l'une quelconque des pièces concernées et au moins une nervure (27, 28), complémentaire de ladite rainure (29, 38), sur l'autre de celles-ci.

3. Accessoire de dérivation suivant la revendication 2, caractérisé en ce que, pour le réducteur (22), il y a, disposées dos à dos, au voisinage, chacune respectivement, de l'extrémité de ses parois latérales (24), du côté de son ouverture de plus grande largeur (25), deux rainures (38), pour la portion de paroi de façade amovible (19A) du boîtier (18), il y a, également, disposées dos à dos, chacune respectivement le long de deux bords opposés d'une telle portion de paroi de façade amovible (19A), deux rainures (29), et, pour chacune des parois latérales transversales (20) dudit boîtier (18), il y a, en saillie vers l'intérieur, deux nervures (27, 28), l'une qui s'étend sensiblement dans l'alignement de la portion de paroi de façade fixe (19B) subsistante, l'autre qui s'étend sensiblement perpendiculairement à la précédente, transversalement par rapport à la paroi latérale transversale (20) qu'elle affecte.

4. Accessoire de dérivation suivant la revendication 3, caractérisé en ce que, du côté de la paroi de façade (23) du réducteur (22), les rainures (38) de celui-ci sont fermées transversalement par une lèvre défonçable (40) qui s'étend en continuité avec ladite paroi de façade (23).

5. Accessoire de dérivation suivant l'une quelconque des revendications 1 à 4, caractérisé en ce que, réalisées en matière synthétique, les diverses pièces (18, 19A, 22) qui le constituent sont attenantes deux à deux lorsqu'il est brut de moulage, avec, entre elles, des zones de moindre résistance.

6. Accessoire de dérivation suivant l'une quelconque des revendications 1 à 5, caractérisé en ce que la paroi de façade (23) du réducteur (22) s'étend elle aussi en oblique, en sorte que ledit réducteur (22) a une forme générale tronc-pyramidale.

7. Accessoire de dérivation suivant l'une quelconque des revendications 1 à 6, caractérisé en ce que, du côté au moins de l'ouverture de plus grande largeur (25), les parois latérales (24) du réducteur (22) ont une hauteur (Hʹ1) supérieure à celle (H1) des parois latérales transversales (20) du boîtier (18).

8. Accessoire de dérivation suivant l'une quelconque des revendications 1 à 7, caractérisé en ce que les parois latérales (24) du réducteur (22) présentent, transversalement, de place en place, en correspondance de l'une à l'autre, et sur une partie au moins de leur hauteur correspondant à la hauteur (h) de l'ouverture de moindre largeur (25ʹ) de ce réducteur (22), des zones de moindre résistance (41), propres à permettre, par élimination d'une portion de ces parois latérales (24), une augmentation de la largeur (Lʹ1) de ladite ouverture de moindre largeur (25ʹ).

9. Accessoire de dérivation suivant l'une quelconque des revendications 1 à 8, caractérisé en ce que le boîtier présente, en saillie, à la base de chacune de ses parois latérales transversales, au moins un crochet pro pre à son crochetage sur les tronçons de couvercle correspondants du conduit concerné.

10. Accessoire de dérivation suivant l'une quelconque des revendications 1 à 9, caractérisé en ce que sur une partie au moins de sa longueur, la paroi latérale longitudinale (21) du boîtier (18) se prolonge par un flasque (33).

11. Accessoire de dérivation suivant l'une quelconque des revendications 1 à 10, caractérisé en ce que le boîtier (18) présente, localement, en saillie vers le bas, parallèlement à sa paroi latérale longitudinale (21) à distance de celle-ci, au moins un ergot (35).

12. Accessoire de dérivation suivant l'une quelconque des revendications 1 à 11, caractérisé en ce que, comme le boîtier (18), le réducteur (22) est dépourvu de fond.

## Claims

1. A branch accessory for a wiring duct such as a channel, moulding, skirting board or the like, characterised in that it comprises on the one hand a casing (18) by means of which it is adapted to be disposed locally in projecting relationship on the body (14) of a main bring duct (10) as the replacement for a corresponding portion of the cover (15) of the latter and which, not having a bottom, has a front wall (19) and three side walls, namely two transverse walls (20) and a longitudinal wall (21), said side walls (20, 21) defining jointly by means of their free edge which is opposite to the front wall (19) a face by way of which the casing (18) is adapted to be disposed on the body (14) of the main wiring duct (10), and, on the other hand, a reducing member (22) which forms a separate part from the casing (18) and which itself comprises a front wall (23) and two side walls (24) which are each disposed on respective sides of the front wall (23) at positions corresponding to the transverse side walls (20) of the casing (18), said front wall (23) and said side walls (24) of said reducing member (22) defining jointly by their ends which are disposed on the same side two openings (25, 25') of substantially quadrangular contour, one opening (25) which is of a width (L₁) substantially equal to the spacing (E) between the transverse side walls (20) of the casing (1) and by way of which the reducing member (22) is adapted to be fitted to the casing (18), and the other opening (25') which is of a width (L'₁) less than the foregoing and by way of which the reducing member (22) is intended to fit over a branched wiring duct (10') which is disposed substantially perpendicularly to the main wiring duct (10) in such a way that the two side walls (24) of the reducing member extend obliquely between the two openings (25, 25'), with, between said reducing member (22) and the transverse side walls (20) of said casing (18), at the free end of the latter, that is to say on the side thereof which is opposite to the longitudinal side wall (21) of said casing (18), coupling means such as to permit said reducing member (22) to be fitted removably thereto in a first orientation in which said reducing member (22) is substantially in lateral alignment with the casing (18), and that a portion (19A) at least of the front wall (19) of said casing (18), between the transverse side walls (20) of the casing, is itself removable, with, bean said removable front wall portion (19A) and said transverse side walls (20), coupling means of the same type as the foregoing, such that, as a replacement for said removable front wall portion (19A), the reducing member (22) can be fitted to the casing (18) in a second orientation at right angles with respect to the first orientation, in which said reducing member (22) projects generally in relation to the front wall (19) of the casing (18).

2. A branch accessory according to claim 1 characterised in that the coupling means are sliding means, said sliding means comprising at least one groove (29, 38) on either one of the parts in question and at least one rib (27, 28) which is complementary to said groove (29, 38) on the other of said parts.

3. A branch accessory according to claim 2 characterized in that, for the reducing member (22), there are two grooves (38) each respectively disposed back-to-back in the vicinity of the ends of its side walls (24), at the side of its opening (25) of greater width, for the removable front wall portion (19A) of the casing (18), there are also two grooves (29) each respectively disposed back-to-back along two opposite edges of such a removable front wall portion (19A), and, for each of the two transverse side walls (20) of said casing (18), there are two ribs (27, 28) in inwardly projecting relationship, one rib which extends substantially in alignment with the fixed front wall portion (19B) which still exists, and the other which extends substantially perpendicularly to the first-mentioned rib, transversely with respect to the transverse side wall (20) that it involves.

4. A branch accessory according to claim 3 characterised in that, at the front wall (23) of the reducing member (22), the grooves (38) of the latter are closed transversely by a lip (40) which can be knocked out and which extends in a relationship of continuity with said front wall (23).

5. A branch accessory according to any one of claims 1 to 4 characterised in that, being made of synthetic material, the various parts (18, 19A, 22) which make it up are adjoining in twos when it is in the rough-moulded state, with regions of lower strength between them.

6. A branch accessory according to any one of claims 1 to 5 characterised in that the front wall (23) of the reducing member (22) also extends obliquely so that said reducing member (22) is of a general frustoconical shape.

7. A branch accessory according to any one of claims 1 to 6 characterised in that, at the side of at least the opening (25) of greater width, the side walls (24) of the reducing member (22) are of a height (H'1) which is greater than the height (H1) of the transverse side walls (20) of the casing (18).

8. A branch accessory according to any one of clams 1 to 7 characterised in that the side walls (24) of the reducing member (22) comprise transversely in place-wise manner in mutually corresponding positions and over a part at least of their height corresponding to the height (h) of the opening (25') of smaller width of said reducing member (22), regions (41) of lower strength which are such as to permit an increase in the width (L'1) of said opening (25') of smaller width, by the removal of a portion of said side walls (24).

9. A branch accessory according to any one of claims 1 to 8 characterised in that the casing has in projecting relationship at the base of each of its transverse side walls at least one hook for hooking engagement thereof on to the corresponding cover portions of the duct in question.

10. A branch accessory according to any one of claims 1 to 9 characterised in that over a part at least of its length the longitudinal side wall (21) of the casing (18) is prolonged by a flange (33).

11. A branch accessory according to any one of claims 1 to 10 characterised in that the casing (18) comprises locally at least one lug (35) in downwardly projecting relationship parallel to its longitudinal side wall (21) at a spacing therefrom.

12. A branch accessory according to any one of claims 1 to 11 characterised in that, like the casing (18), the reducing member (22) is without a bottom.

## Patentansprüche

1. Abzweigungszubehör für Verkabelungsrohre wie Rinnen, Leisten, Sockelleisten oder dergl., dadurch gekennzeichnet, daß es einerseits ein Gehäuse (18), durch das es örtlich hervorstehend auf dem Körper (14) eines Hauptverkabelungsrohrs (10) anstelle eines entsprechenden Abschnitts dessen Deckel (15) angeordnet werden kann und das keinen Boden besitzt und eine Stirnwand (19) und drei Seitenwände, und zwar zwei Querwände (20) und eine Längewand (21), aufweist, wobei die Seitenwände (20, 21) zusammen durch ihren der Stirnwand (19) entgegengesetzten freien Rand eine Fläche definieren, durch die das Gehäuse (18) Auf dem Körper (14) des Hauptverkabelungsrohrs (10) angeordnet werden kann, und andererseits ein Reduzierstück (22) besitzt, das ein vom Gehäuse (18) getrenntes Teil bildet und seinerseits eine Stirnwand (23) und zu deren beiden Seiten in Entsprechung mit den Querseitenwänden (20) des Gehäuses (18) zwei Seitenwände (24) besitzt, wobei die Stirnwand (23) und die Seitenwände (24) des Reduzierstücks (22) zusammen durch ihre auf einer gemeinsamen Seite gelegenen Enden zwei Öffnungen (25, 25') mit im wesentlichen rechteckigem Umriß definieren, und zwar eine (25), deren Breite (L₁) im wesentlichen gleich dem Abstand (E) der Querseitenwände (20) des Gehäuses (18) ist und durch die das Reduzierstück (22) auf den Gehäuse (18) angebracht werden kann, und eine andere (25'), deren Breite (L'₁) kleiner als die vorhergehende ist und durch die das Reduzierstück (22) ein Abzweigverkabelungsrohr (10') abdecken kann, das im wesentlichen senkrecht zum Hauptverkabelungsrohr (10 ) angeordnet ist, so daß die beiden Seitenwände (24) des Reduzierstücks sich zwischen den beiden Öffnungen (25, 25') schräg erstrecken, wobei zwischen dem Reduzierstück (22) und den Querseitenwänden (20) des Gehäuses (18) an deren freiem Ende, d.h. auf der Seite der Querseitenwände, die der Längsseitenwand (21) des Gehäuses (18) entgegengesetzt ist, Kupplungsmittel vorgesehen sind, die daran die lösbare Anbringung des Reduzierstücks (22) in einer ersten Ausrichtung gestatten, in der das Reduzierstück (22) im wesentlichen in der seitlichen Verlängerung des Gehäuses (18) ist, und daß wenigstens ein Teil (19A) der Stirnwand (19) des Gehäuses (18) zwischen dessen Querseitenwänden (20) seinerseits abnehmbar ist, wobei zwischen dem abnehmbaren Stirnwandteil (19A) und den Querseitenwänden (20) Kupplungsmittel vom gelben Typ wie die vorhergehenden vorgesehen sind, so daß das Reduzierstück (22) anstelle dieses abnehmbaren Stirnwandteils (19A) auf dem Gehäuse (18) in einer zweiten Ausrichtung befestigt werden kann, die zur ersten rechtwinklig ist und in der das Reduzierstück (22) insgesamt auf der Stirnwand (19) des Gehäuses (18) hervorsteht.

2. Abzweigungszubehör nach Anspruch 1, dadurch gekennzeichnet, daß die Kupplungsmittel Gleitmittel sind, die wenigstens eine Nut (29, 38) auf einen beliebigen der betreffenden Teile und wenigstens eine die Nut (29, 38) ergänzende Rippe (27, 28) auf dem anderen dieser Teile umfassen.

3. Abzweigungszubehör nach Anspruch 2, dadurch gekennzeichnet, daß für das Reduzierstück (22) zwei Nuten (38), die Rücken an Rücken in Nähe jeweils des Endes seiner Seitenwände (24) auf der Seite seiner Öffnung größerer Breite (25) angeordnet sind, für den abnehmbaren Stirnwandteil (19A) des Gehäuses (18) zwei Nuten (29), die ebenfalls Rücken an Rücken jeweils längs zwei einander entgegengesetzten Rändern eines solchen abnehmbaren Stirnwandteils (19A) angeordnet sind, und für jede der Querseitenwände (20) des Gehäuses (18) zwei nach innen hervorstehende Rippen (27, 28) vorgesehen sind, deren eine sich im wesentlichen in der Flucht des verbleibenden feststehenden Stirn wandteils (19B) erstreckt und deren andere sich im wesentlichen senkrecht zur vorhergehenden quer zu der Querseitenwand (20) erstreckt, an der sie vorgesehen ist.

4. Abzweigungszubehör nach Anspruch 3, dadurch gekennzeichnet, daß die Nuten (38) des Reduzierstücks (22) auf der Seite der Stirnwand (23) dieses Reduzierstücks in Querrichtung durch eine eindrückbare Lippe (40) geschlossen sind, die sich in Kontinuität mit der Stirnwand (23) erstreckt.

5. Abzweigungszubehör nach einem der Ansprüche 1 bis 4, dadurch gekennzeichnet, daß die einzelnen, es bildenden Teile (18, 19A, 22) aus Kunststoff bestehen und je zwei zu zwei aneinandergrenzend, wenn sie roh geformt sind, wobei zwischen ihnen Zonen geringerer Festigkeit bestehen.

6. Abzweigungszubehör nach einem der Ansprüche 1 bis 5, dadurch gekennzeichnet, daß sich die Stirnwand (23) des Reduzierstücks (22) ebenfalls schräg erstreckt, so daß das Reduzierstück (22) eine allgemeine Pyramidenstumpfform hat.

7. Abzweigungszubehör nach einem der Ansprüche 1 bis 6, dadurch gekennzeichnet, daß die Seitenwände (24) des Reduzierstücks (22) wenigstens auf der Seite der Öffnung (25) größerer Breite eine Höhe (H'1) haben, die größer als die Höhe (H1) der Querseitenwände (20) des Gehäuses (18) ist.

8. Abzweigungszubehör nach einem der Ansprüche 1 bis 7, dadurch gekennzeichnet, daß die Seitenwände (24) des Reduzierstücks (22) in Querrichtung, stellenweise, in Entsprechung zueinander und auf wenigstens einem Teil ihrer Höhe, die der Höhe (h) der Öffnung kleinerer Breite (25') des Reduzierstücks (22) entspricht, Zonen (41) geringerer Festigkeit aufweisen, die durch Entfernung eines Teils dieser Seitenwände (24) eine Vergrößerung der Breite (L'1) der Öffnung geringerer Breite (25') gestatten.

9. Abzweigungszubehör nach einem der Ansprüche 1 bis 8, dadurch gekennzeichnet, daß das Gehäuse an der Basis jeder seiner Querseitenwände hervorstehend wenigstens einen Haken besitzt, der seine Einhakung an den entsprechenden Deckelabschnitten des betreffenden Rohrs gestattet.

10. Abzweigungszubehör nach einem der Ansprüche 1 bis 9, dadurch gekennzeichnet` daß die Längsseitenwand (21) des Gehäuses (18) wenigstens auf einem Teil ihrer Länge durch eine Wange (33) verlängert ist.

11. Abzweigungszubehör nach einem der Ansprüche 1 bis 10, dadurch gekennzeichnet, daß das Gehäuse (18) stellenweise nach unten hervorstehend und parallel zu seiner Längeseitenwand (21) in einem Abstand von dieser wenigstehe eine Nase (35) aufweist.

12. Abzweigungszubehör nach einem der Ansprüche 1 bis 11, dadurch gekennzeichnet, daß das Reduzierstück (22) wie das Gehäuse (18) keinen Boden aufweist.
